# EUROPÄISCHE PATENTSCHRIFT

(11) **EP 2 582 939 B1**
(45) Veröffentlichungstag und Bekanntmachung des Hinweises auf die Patenterteilung: **06.05.2015**
(21) Anmeldenummer: 11730237.2
(22) Anmeldetag: 16.05.2011
(51) Int. Cl.: F01N 3/20

(54) **Einspritz- und Dosiervorrichtung**
Injection and metering device
Dispositif d'injection et de dosage

(30) Priorität: 16.06.2010 DE 102010030162
(43) Veröffentlichungstag der Anmeldung: 24.04.2013
(73) Patentinhaber: Robert Bosch GmbH, 70442 Stuttgart (DE)
(72) Erfinder: LOESCH, Stefan, 86647 Wortelstetten (DE)
(86) Internationale Anmeldenummer: PCT/EP2011/057885
(87) Internationale Veröffentlichungsnummer: WO 2011/157502

(56) Entgegenhaltungen:
- WO-A1-2006/040086

## Beschreibung

Die Erfindung betrifft eine Einspritz- und Dosiervorrichtung, insbesondere eine Einspritz- und Dosiervorrichtung zum Einspritzen von Fluid in einen Abgasstrang.

### Stand der Technik

Die Anforderungen an die Abgasqualität von Brennkraftmaschinen, insbesondere von Brennkraftmaschinen zum Antrieb von Kraftfahrzeugen, haben in den letzten Jahren ständig zugenommen. Vor allem bei Dieselmotoren stellt die NOₓ Emission ein Problem dar, dem mit Hilfe von so genannten SCR-Katalysatoren entgegengewirkt wird. In einem SCR-Katalysator werden umweltschädliche NOₓ mit Hilfe von NH₃, das dem Katalysator in der Regel in Form einer wässrigen Harnstofflösung zugeführt wird, in N₂ und H₂O umgewandelt.

Zum Zuführen der Harnstofflösung ist ein Dosiersystem erforderlich, welches herkömmlicherweise eine elektrisch betriebene Dosierpumpe, die den gewünschten Einspritzdruck erzeugt, und ein Dosierventil, welches die benötigte Einspritzmenge zumisst, umfasst. Die Kombination aus einer elektrisch betriebenen Pumpe und einem elektrisch angesteuerten Dosierventil ist aufwändig und teuer in der Herstellung, Montage und Wartung. Durch die bei einer solchen Kombination notwendige Druckleitung zwischen der Dosierpumpe und dem Dosierventil können Druckwellen, die durch den Betrieb der Dosierpumpe und/oder das Schließen des Ventils erzeugt werden, zwischen der Dosierpumpe und dem Dosierventil übertragen werden, sich gegenseitig überlagern und zu einem undefinierten Öffnungsverhalten der Düsennadel führen.

DE 10 2007 016 004 A1 zeigt eine Dosiervorrichtung zum dosierten Einspritzen von Abgasnachbehandlungsmittel in eine Abgasanlage eines Verbrennungsmotors. Die Dosiervorrichtung hat eine Dosierpumpe, die auf ihrer Druckseite ventilfrei mit einer Einspritzdüse verbunden ist.

EP 1 878 920 A1 offenbart eine Fluidpumpe mit einem Einlass, einem Auslass und einer Pumpkammer, welche ausgebildet ist, Flüssigkeit aus dem Einlass aufzunehmen. Ein Aktuator ist zwischen einer ersten und einer zweiten Position bewegbar und ausgebildet, um Flüssigkeit aus der Pumpkammer in den Auslass zu pumpen. Wenn sich der Aktuator in der ersten Position befindet, stehen der Einlass und die Pumpkammer in Verbindung mit einer Zulieferpassage. Die Zulieferpassage erstreckt sich um den Aktuator, um eine Wärmeübertragung von dem Aktuator an die Flüssigkeit zu ermöglichen.

Ein Hochdruckdosierpumpe zur Förderung von Reduktionsmittel in ein Einflüssigkeits-Abgasdosiersystem weist gemäß US 2007/0295003 A1 einen Elektromagneten zum Antreiben eines Kolbens, der in einer Bohrung, die innerhalb eines Ventilgehäuses der Pumpe ausgebildet ist, auf. Die Bohrung hat eine Druckkammer mit einem Einlass-Rückschlagventil und einem Auslass-Rückschlagventil. Bewegen des Kolbens bewirkt, dass Reduktionsmittel unter hohem Druck in eine Einspritzdüse gelangt, die an einer Stelle angeordnet ist, um eine maximale Reduktion unerwünschter Schadstoffe in den Abgasen zu bewirken.

Die WO2006/040086 beschreibt eine gepulste Zufuhr eines Reduktionsmittels in den Abgasstrang einer Brennkraftmaschine unter Hochdruck.

### Offenbarung der Erfindung

Eine Aufgabe der Erfindung ist es, eine kostengünstige Einspritz- und Dosiervorrichtung bereit zu stellen, welche zuverlässig dosiertes Einspritzen von Fluid ermöglicht.

Die Aufgabe wird durch eine erfindungsgemäße Einspritz- und Dosiervorrichtung nach dem unabhängigen Patentanspruch 1 und ein Verfahren zum Einspritzen von Fluid nach dem unabhängigen Patentanspruch 7 gelöst. Die abhängigen Patentansprüche beschreiben vorteilhafte Ausgestaltungen einer erfindungsgemäßen Einspritz- und Dosiervorrichtung und des erfindungsgemäßen Verfahrens.

Eine erfindungsgemäße Einspritz- und Dosiervorrichtung, die insbesondere zum dosierten Einspritzen von Fluid in einen Abgasstrang eines Verbrennungsmotors ausgebildet ist, hat einen Druck- und Einspritzraum, der zur Aufnahme des einzuspritzenden Fluids ausgebildet ist und wenigstens eine Einspritzöffnung aufweist; ein bewegbares Druckelement, das so ausgebildet ist, dass der Druck im Druck- und Einspritzraum durch Bewegen des Druckelements zwischen einer Ansaugposition, in der der Druck im Einspritzraum minimal ist, und einer Druckposition, in der der Druck im Druck- und Einspritzraum maximal ist, variierbar ist; und ein Verschlusselement, das zwischen einer Verschlussposition, in der es eine Einspritzöffnung verschließt, und einer geöffneten Position, in der es die Einspritzöffnung frei gibt, bewegbar ist. Dabei sind das Druckelement und das Verschlusselement über wenigstens zwei voneinander unabhängige Wirkmechanismen miteinander gekoppelt. Jeder der Wirkmechanismen ist für sich geeignet, zu bewirken, dass eine Bewegung des Druckelements von der Ansaugposition in die Druckposition eine Bewegung des Verschlusselements von der Verschlussposition in eine geöffnete Position zur Folge hat. In einem ersten Wirkmechanismus wirkt das Druckelement über das Fluid im Einspritzraum auf das Verschlusselement ein, dabei ist das Verschlusselement insbesondere durch eine Zunahme des Fluiddrucks im Einspritzraum in eine geöffnete Position bewegbar. Das Druckelement wirkt darüber hinaus über einen zweiten Wirkmechanismus, der unabhängig vom ersten Wirkmechanismus und dem Fluid im Einspritzraum ist, auf das Verschlusselement ein.

Der erste Wirkmechanismus ermöglicht eine verschleißfreie und geräuscharme Betätigung des Verschlusselements durch Bewegen des Druckelements. Durch den zweiten, unabhängigen Wirkmechanismus wird sichergestellt, dass das Verschlusselement auch dann zuverlässig geöffnet wird, wenn das Einwirken über das Fluid, d.h. durch den ersten Wirkmechanismus, gestört und nicht ausreichend ist, um das Verschlusselement in eine geöffnete Position zu bewegen. Das Einwirken über den ersten Wirkmechanismus kann gestört sein, z.B. weil aufgrund von komprimierbaren Gasblasen im Fluid kein zum Öffnen des Verschlusselements ausreichender Druck im Einspritzraum aufgebaut werden kann.

Dadurch, dass das Druckelement und das Verschlusselement in einer einzigen Vorrichtung integriert bzw. zusammengefasst sind und insbesondere der Druckraum (Pumpenraum), in dem ein erhöhter Druck des Fluids erzeugt wird, mit dem Einspritzraum (Düsenraum) zusammengelegt ist, wirkt die Düse gleichzeitig als druckseitiges Ventil der Pumpe. Ein zusätzliches, druckseitiges Ventil der Pumpe und eine Druckleitung mit Verbindungselementen, um die Pumpe mit der Einspritzdüse zu verbinden, können eingespart werden. Ein Dosiersystem mit einer erfindungsgemäßen Einspritz- und Dosiervorrichtung ist daher kostengünstig realisierbar.

Durch den Verzicht auf eine Druckleitung zwischen der Pumpe und der Einspritzdüse wird das Ausbilden von Druckwellen, die das Öffnungsverhalten der Düse negativ beeinflussen können, verhindert. Zusätzlich wird durch die räumliche Zusammenlegung des Druckraums mit dem Einspritzraum die Anzahl möglicher Reflexionsstellen, an denen Druckwellen reflektiert werden können, minimiert. Durch den reduzierten Einfluss von Druckwellen wird die Reproduzierbarkeit der Einspritzvorgänge insbesondere bezüglich der Einspritzmenge und der Sprayaufbereitung über einen großen Bereich möglicher Einspritzfrequenzen optimiert.

Dadurch, dass das Druckelement und das Verschlusselement über zwei voneinander unabhängige Wirkmechanismen miteinander gekoppelt sind, wird ein zuverlässiges Öffnen der Einspritzöffnung in allen Betriebszuständen sichergestellt.

In einer Ausführungsform wirkt das Druckelement durch mechanischen Kontakt auf das Verschlusselement ein. Insbesondere berührt das Druckelement in einer Endposition, in welcher der Druck im Druck- und Einspritzraum maximal ist, das Verschlusselement. Durch mechanischen Kontakt wird eine zuverlässige Einwirkung des Verschlusselements auf das Druckelement sichergestellt.

In einer Ausführungsform weist das Verschlusselement ein Kopplerelement auf und das Druckelement wirkt durch mechanischen Kontakt mit dem Kopplerelement auf das Verschlusselement ein. Insbesondere berührt das Druckelement in einer Endposition, in welcher der Druck im Druck- und Einspritzraum maximal ist, das Kopplerelement und das Kopplerelement überträgt die Bewegung des Druckelements auf das Verschlusselement.

Ein Kopplerelement ermöglicht ein sicheres Übertragen der Einwirkung des Druckelements auf das Verschlusselement. Insbesondere kann das Kopplerelement so ausgebildet sein, dass der durch die Berührung mit dem Druckelement verursachte Verschleiß und die bei der Berührung erzeugte Geräuschentwicklung minimiert werden. Das Kopplerelement kann einstückig mit dem Verschlusselement oder als separates Element, welches im Betrieb mit dem Verschlusselement verbunden ist, ausgebildet sein.

In einer Ausführungsform ist das Druckelement mit einem Anker verbunden und es ist eine elektrische Spule vorgesehen. Der Anker und die elektrische Spule sind derart ausgebildet, dass der Anker und das mit ihm verbundene Druckelement durch Bestromen der Spule bewegbar sind. Durch eine solche Anordnung ist das Druckelement einfach und zuverlässig bewegbar.

In einer Ausführungsform ist ein elastisches Ankerfederelement vorgesehen, welches derart ausgebildet ist, dass es den Anker und/oder das Druckelement in eine Ansaugposition drückt.

In einer Ausführungsform ist ein elastisches Ventilfederelement vorgesehen, welches derart ausgebildet ist, dass es das Verschlusselement in eine Verschlussposition drückt. Durch derartige Federelemente wird einfach und zuverlässig sichergestellt, dass sich der Anker, das Druckelement und/oder das Verschlusselement im Ruhezustand, wenn kein Strom durch die Spule fließt, zuverlässig in einer gewünschten Ruheposition befinden.

Die Erfindung umfasst auch ein Verfahren zum Einspritzen von Fluid, insbesondere zum dosierten Einspritzen eines Fluids in einen Abgasstrang eines Verbrennungsmotors. Dabei umfasst das Verfahren den Schritt des Bewegens eines Druckelementes aus einer Ansaugposition in eine Druckposition, um den Druck des Fluids zu erhöhen. Die Bewegung des Druckelements wirkt über wenigstens einen von wenigstens zwei voneinander unabhängigen Wirkmechanismus auf ein Verschlusselement ein. Dabei ist jeder der Wirkmechanismen für sich geeignet, zu bewirken, dass sich das Verschlusselement von einer Verschlussposition, in der es eine Einspritzöffnung verschließt, in eine geöffnete Position, in der es die Einspritzöffnung freigibt, bewegt, wenn sich das Druckelement aus der Ansaugposition in die Druckposition bewegt. Das Druckelement wirkt in einem ersten Wirkmechanismus über das einzuspritzende Fluid und in einem zweiten Wirkmechanismus unabhängig von dem einzuspritzenden Fluid auf das Verschlusselement ein.

Dadurch, dass das Druckelement ausgebildet ist, über zwei voneinander unabhängige Wirkmechanismen auf das Verschlusselement einzuwirken, wird ein zuverlässiges Öffnen des Verschlusselementes und damit ein Einspritzen von Fluid in allen Betriebszuständen sichergestellt.

Ein Verfahren, welches über das einzuspritzende Fluid auf das Verschlusselement einwirkt, ermöglicht ein besonders verschleiß- und geräuscharmes Einwirken auf das Verschlusselement, um dieses zu bewegen. Ein unabhängig von dem einzuspritzenden Fluid auf das Verschlusselement einwirkender Wirkmechanismus stellt ein zuverlässiges Öffnen der Einspritzöffnung insbesondere in Betriebszuständen sicher, in denen das Einwirken über das Fluid gemäß dem ersten Wirkmechanismus gestört ist.

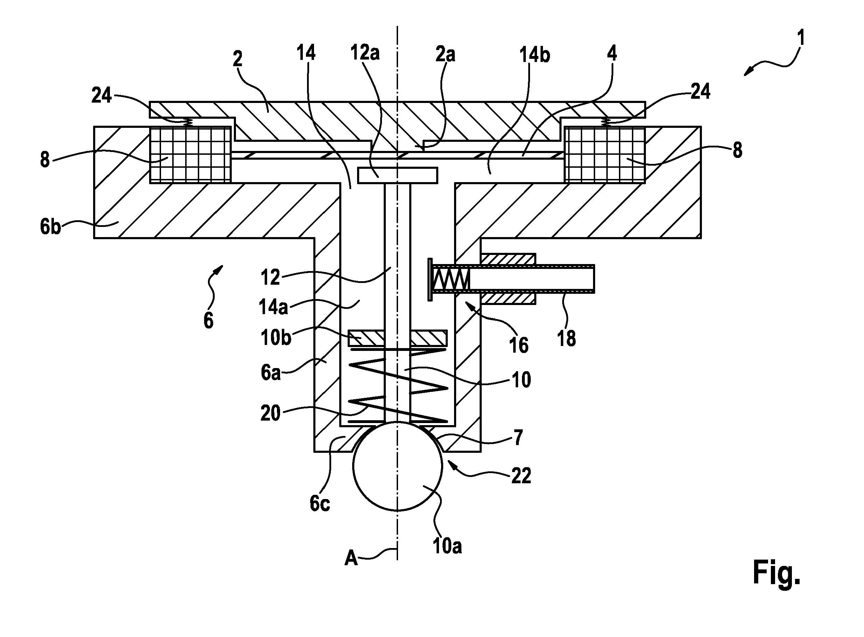

Die Erfindung wird anhand der beiliegenden Figur näher erläutert.

Die Figur zeigt eine schematische Schnittansicht eines Ausschnitts aus einer erfindungsgemäßen Einspritz- und Dosiervorrichtung 1.

In der folgenden Beschreibung dienen Angaben wie "oben" und "unten" der besseren Erläuterung der in der Figur gezeigten schematischen Darstellung eines Ausführungsbeispiels der Erfindung, ohne die Erfindung auf das gezeigte Ausführungsbeispiel oder eine bestimmte Orientierung bzw. Einbauposition zu beschränken.

Die Einspritz- und Dosiervorrichtung 1 weist einen im Wesentlichen rotationssymmetrisch um eine Längsachse A ausgebildeten Haltekörper 6 mit einem unteren Haltekörper-Bereich 6a und einem oberen Haltekörper-Bereich 6b auf. Der untere Haltekörper-Bereich 6a hat in einer Ebene, die in einem rechten Winkel zur Längsachse A angeordnet ist, einen kleineren Querschnitt als der obere Haltekörper-Bereich 6b.

In dem Haltekörper 6 ist, z.B. rotationssymmetrisch um die Längsachse A, ein Druck- und Einspritzraum 14 mit einem oberen Bereich 14a und einem unteren Bereich 14b ausgebildet. Der obere Bereich 14b des Druck- und Einspritzraums 14, der im oberen Haltekörper-Bereich 6b ausgebildet ist, hat in einer Ebene, die rechtwinklig zur Längsachse A angeordnet ist, einen größeren Durchmesser als der untere Bereich 14a, der im unteren Haltekörper-Bereich 6a ausgebildet ist.

In einer in der Figur unten dargestellten Stirnseite 6c des unteren Haltekörper-Bereichs 6a, die den unteren Bereich 14a des Druck- und Einspritzraums 14 nach unten begrenzt, ist um die Längsachse A eine Einspritzöffnung 22 ausgebildet, die von einem Ventilsitz 7 umgeben ist.

Durch die Einspritzöffnung 22 und den unteren Bereich 14a des Druck- und Einspritzraums 14 erstreckt sich parallel zur Längsachse A eine Düsennadel 10, an deren unteren Ende außerhalb des Druck- und Einspritzraums 14 ein kugelförmig ausgebildetes Verschlusselement 10a angeordnet ist, das von unten, d.h. von außerhalb des Haltekörpers 6 auf dem um die Einspritzöffnung 22 ausgebildeten Ventilsitz 7 aufliegt und die Einspritzöffnung 22 im Wesentlichen fluiddicht verschließt, wenn sich die Düsennadel 10 in einer oberen Verschlussposition befindet.

In einem Abstand von der Einspritzöffnung 22 ist innerhalb des unteren Bereichs 14a des Druck- und Einspritzraums 14 um den Umfang der Düsennadel 10 ein Abstützring 10b angeordnet, der fest mit der Düsennadel 10 verbunden ist. Ein elastisches Ventilfederelement (Düsennadel-Federelement) 20 ist um einen Bereich der Düsennadel 10, der sich entlang der Längsachse A zwischen dem Abstützring 10b und der unteren Stirnseite 6c des unteren Bereichs 14a des Druck- und Einspritzraums 14 erstreckt, angeordnet und stützt die Düsennadel 10 elastisch so an der Stirnseite 6c des unteren Haltekörper-Bereichs 6a ab, dass die Düsennadel 10 in Richtung parallel zur Längsachse A bewegbar ist.

Durch das elastische Ventilfederelement 20 wird die Düsennadel 10 im Ruhezustand in die obere Verschlussposition gedrückt, in welcher ein oberer, dem Haltekörper 6 zugewandter Bereich des kugelförmigen Verschlusselements 10a an dem Ventilsitz 7, der um die Einspritzöffnung 22 ausgebildet ist, anliegt und die Einspritzöffnung 22 im Wesentlichen fluiddicht verschließt, sodass kein Fluid aus dem Druck- und Einspritzraum 14 durch die Einspritzöffnung 22 austreten kann.

Ein Bereich der Düsenadel 10, der oberhalb des Abstützringes 10b an dem von dem Verschlusselement 10a abgewandten Ende angeordnet ist, ist als Kopplerelement 12 ausgebildet, welches sich entlang der Längsachse A durch den unteren Bereich 14a des Druck- und Einspritzraums 14 bis in den oberen Bereich 14b des Druck- und Einspritzraums 14 erstreckt. Am oberen, von dem Verschlusselement 10a abgewandten Ende der Düsennadel 10 ist an dem Kopplerelement 12 ein stempelförmiger Kopplerbereich 12a ausgebildet. Der Kopplerbereich 12a hat in einer Ebene, die in einem rechten Winkel zur Längsachse A angeordnet ist, einen größeren Querschnitt als die Düsennadel 10 und als das Kopplerelement 12.

Ein oberes, vom Verschlusselement 10a abgewandtes Ende des Druck- und Einspritzraums 14 wird durch eine elastische Membran 4 begrenzt, die entlang ihres Umfangs an einer in der Figur nicht sichtbaren Haltevorrichtung befestigt ist. Das Volumen des Druck- und Einspritzraums 14 ist durch Bewegen der elastischen Membran 4 variierbar.

Oberhalb der elastischen Membran 4 ist im Wesentlichen parallel zu der Ebene, in der die Membran 4 aufgespannt ist, ein Anker 2 angeordnet. An dem Anker 2 ist in einem mittleren Bereich um die Längsachse A ein in Richtung auf die Membran 4 hervorstehender Kontaktbereich 2a ausgebildet. Der Kontaktbereich 2a ist mit einem mittleren Bereich der elastischen Membran 4 verbunden und/oder in diesen integriert, so dass der Kontaktbereich 2a eine mechanische Verbindung zwischen der Membran 4 und dem Anker 2 schafft.

Der Anker 2 ist parallel zur Längsachse A bewegbar. Beim Bewegen des Ankers 2 parallel zur Längsachse A wird durch die Verbindung zwischen dem Anker 2 und der Membran 4 auch die Membran 4 bewegt, so dass das Volumen des Druck- und Einspritzraums 14 durch Bewegen des Ankers 2 variierbar ist.

Innerhalb des oberen Bereichs 6b des Haltekörpers 6 ist um den Umfang der Membran 4 ein Spulenkörper 8 angeordnet. Der Spulenkörper 8 kann insbesondere als oder mit einer Haltevorrichtung für die Membran 4 ausgebildet sein.

Der Anker 2 ist durch wenigstens ein elastisches Ankerfederelement 24, welches zwischen dem Anker 2 und dem Spulenkörper 8 angeordnet ist, elastisch auf dem Spulenkörper 8 abgestützt. Dabei drückt das Ankerfederelement 24 den Anker 2 im Ruhezustand, wenn kein elektrischer Strom durch die Spule 8 fließt, in eine (obere) Ansaugposition, in der das Volumen des Druck- und Einspritzraums 14, der durch die mit dem Anker 2 verbundene Membran 4 begrenzt ist, maximal ist.

Ein Fluidzulauf 18, durch den der Einspritz- und Dosiervorrichtung 1 im Betrieb Fluid aus einem Tankbehälter zuführbar ist, mündet seitlich in den unteren Bereich 14a des Druck- und Einspritzraums 14. An der Mündung des Fluidzulaufs 18 in den Druck- und Einspritzraum 14 ist ein Ein-Wege-Ventil 16 vorgesehen, das einen Fluidfluss aus dem Fluidzulauf 18 in den Druck- und Einspritzraum 14 ermöglicht und einen Rückfluss von Fluid aus dem Druck- und Einspritzraum 14 in den Fluidzulauf 18 verhindert.

Wenn sich der Anker 2 in der zuvor beschriebenen Ansaugposition befindet, strömt Fluid aus dem Fluidzulauf 18 durch das geöffnete Ein-Wege-Ventil 16 in den Druck- und Einspritzraum 14.

Um einen Einspritzvorgang auszulösen, wird über in der Figur nicht sichtbare elektrische Anschlüsse ein elektrischer Strom durch die Spule 8, die zusätzlich mit einem in der Figur nicht sichtbaren Metall- und/oder Ferritkern ausgebildet sein kann, geleitet. Der Strom durch die Spule 8 erzeugt ein magnetisches Feld, welches den oberhalb der Spule 8 angeordneten Anker 2 in Richtung auf den Druck- und Einspritzraum 14 in eine druckerzeugende Einspritzposition anzieht.

Durch eine solche Bewegung des Ankers 2 in eine Einspritzposition wird der mittlere Bereich der elastischen Membran 4 in Richtung auf den Druck- und Einspritzraum 14 bewegt und die Membran 4 verringert das Volumen des Druck- und Einspritzraums 14.

Das Ein-Wege-Ventil 16 schließt und verhindert einen Rückfluss von Fluid aus dem Druck- und Einspritzraum 14 in den Fluidzulauf 18, so dass die beschriebene Bewegung des Ankers 2 und der Membran 4 einen Druckanstieg im Druck- und Einspritzraum 14 zur Folge hat.

Überschreitet der ansteigende Druck im Druck- und Einspritzraum 14 einen vorgegebenen Grenzwert, so ist das Ventilfederelement 20 nicht mehr in der Lage, die Düsennadel 10 gegen den Druck des Fluids im Druck- und Einspritzraum 14 in der Verschlussposition zu halten und die Düsennadel 10 bewegt sich in eine geöffnete Position, wobei sich das Verschlusselement 10a vom Ventilsitz 7 löst und die Einspritzöffnung 22 frei gibt, so dass Fluid aus dem Druck- und Einspritzraum 14 durch die Einspritzöffnung 22 ausströmen kann (Einspritzvorgang).

Im Normalbetrieb wird die Düsennadel 10, wie zuvor beschrieben, durch den erhöhten Druck im Druck- und Einspritzraum 14 in die geöffnete Position bewegt. Da die Düsennadel 10 in diesem Fall hydraulisch bewegt wird, sind der Verschleiß und die Geräuschentwicklung gering.

Wird der zum Öffnen der Düsennadel 10 notwendige Fluiddruck im Druck- und Einspritzraum 14 nicht erreicht, z.B. weil sich ein komprimierbares Gas, insbesondere Luft, im Druck- und Einspritzraum 14 befindet, so stößt der an dem Kontaktbereich 2a des Ankers 2 befestigte mittlere Bereich der Membran 4 kurz bevor der maximale Hub des Ankers 2 (unterer Totpunkt) erreicht ist, gegen den Kopplerbereich 12a des Kopplerelements 12 und drückt das Kopplerelement 12 in Richtung auf die Einspritzöffnung 22.

Die Bewegung des Kopplerelements 12a überträgt sich auf die Düsennadel 10. Die Düsennadel 10 und das kugelförmige Verschlusselement 10a bewegen sich von der Verschlussposition in eine geöffnete Position, in der das Verschlusselement 10a die Einspritzöffnung 22 freigibt.

Durch diesen Wirkmechanismus wird die Einspritzöffnung 22 auch dann geöffnet, wenn der für eine hydraulische Bewegung der Düsennadel 10 notwendige Fluiddruck im Druck- und Einspritzraum 14 nicht erreicht wird. Fluid und Gase können durch die Einspritzöffnung 22 aus dem Druck- und Einspritzraum 14 entweichen. Es ist sichergestellt, dass z.B. in den Druck- und Einspritzraum 14 angesaugte Luft oder durch eine chemische Zersetzung des Fluids entstandene Gase im Druck- und Einspritzraum 14 durch die Einspritzöffnung 22 entweichen können und die Einspritz- und Dosiervorrichtung 1 betriebsfähig bleibt.

Die Verbindung zwischen dem Kontaktbereich 2a und der Membran 4 kann auch so ausgebildet sein, dass sich der Kontaktbereich 2a durch die Membran 4 hindurch erstreckt und den Kopplerbereich 12a des Kopplerelements 12a berührt, kurz bevor der Anker 2 den unteren Totpunkt erreicht.

Da der Hub der Düsennadel 10 in der Regel nur einen Bruchteil des Pumpenhubes, d. h. des Hubes des Ankers 2, beträgt, ist es ausreichend, wenn die Membran 4 bzw. der Kontaktbereich 2a des Ankers 2 den Kopplerbereich 12a des Kopplerelements 12a erst kurz vor dem unteren Totpunkt des Ankerhubes 2 berührt, um die Düsennadel 10 in eine geöffnete Position zu bewegen.

Im Normalbetrieb, wenn sich keine komprimierbaren Gase im Druck- und Einspritzraum 14 befinden, findet vorzugsweise keine Berührung zwischen der Membran 4 und dem Stempelelement 12a statt. Verschleiß und Geräuschentwicklungen, die durch ein Anschlagen der Membran 4 bzw. des Ankers 2 an den Kopplerbereich 12a des Kopplerelements 12a verursacht werden, können so im Normalbetrieb vermieden werden.

Die Erfindung stellt einer Einspritz- und Dosiervorrichtung bereit, welche zuverlässig ein dosiertes Einspritzen von Fluid ermöglicht und die im Normalbetrieb geräusch- und verschleißarm betrieben werden kann.

## Patentansprüche

1. Einspritz- und Dosiervorrichtung (1) insbesondere zum Einspritzen von Fluid in einen Abgasstrang eines Verbrennungsmotors mit
einem Druck- und Einspritzraum (14), der zur Aufnahme des einzuspritzenden Fluids ausgebildet ist und wenigstens eine Einspritzöffnung (22) hat;
einem bewegbaren Druckelement (4), welches so ausgebildet ist, dass der Druck von Fluid im Druck- und Einspritzraum (14) durch Bewegen des Druckelements (4) zwischen einer Ansaugposition, in welcher der Druck im Druck- und Einspritzraum (14) minimal ist, und einer Einspritzposition, in welcher der Druck im Druck- und Einspritzraum (14) maximal ist, variierbar ist; und
einem Verschlusselement (10), das zwischen einer Verschlussposition, in der es die Einspritzöffnung (22) verschließt, und einer geöffneten Position, in der es die Einspritzöffnung (22) frei gibt, bewegbar ist,
**dadurch gekennzeichnet, dass**
das Druckelement (4) und das Verschlusselement (10) über wenigstens zwei voneinander unabhängige Wirkmechanismen gekoppelt sind und wobei jeder der unabhängigen Wirkmechanismen geeignet ist, zu bewirken, dass eine Bewegung des Druckelements (4) von der Ansaugposition in die Druckposition eine Bewegung des Verschlusselements (10) von der Verschlussposition in eine geöffnete Position zur Folge hat,
wobei ein erster Wirkmechanismus so ausgebildet ist, dass das Druckelement (4) im Betrieb über Fluid, das sich im Druck- und Einspritzraum (14) befindet, auf das Verschlusselement (10) einwirkt, und ein zweiter Wirkmechanismus so ausgebildet ist, dass das Druckelement (4) im Betrieb unabhängig vom Fluid im Druck- und Einspritzraum (14) auf das Verschlusselement (10) einwirkt.

2. Einspritz- und Dosiervorrichtung nach Anspruch 1, die so ausgebildet ist, dass das Druckelement (4) durch mechanischen Kontakt auf das Verschlusselement (10) einwirkt.

3. Einspritz- und Dosiervorrichtung nach Anspruch 2, die so ausgebildet ist, dass das Verschlusselement (10) ein Kopplerelement (12) aufweist und das durch mechanischen Kontakt mit dem Kopplerelement (12) auf das Verschlusselement (10) einwirkt.

4. Einspritz- und Dosiervorrichtung nach einem der vorangehenden Ansprüche mit einer Spule (8) und einem Anker (2), wobei das Druckelement (4) mechanisch mit dem Anker (2) verbunden ist, und wobei der Anker (2) und die Spule (8) derart ausgebildet sind, dass der Anker (2) und das Druckelement (4) durch Bestromen der Spule (8) bewegbar sind.

5. Einspritz- und Dosiervorrichtung nach Anspruch 4, wobei wenigstens ein Ankerfederelement (24) vorgesehen ist, welche derart ausgebildet und angeordnet ist, dass es den Anker (14) und/oder das Druckelement (4) in die Ansaugposition drückt.

6. Einspritz- und Dosiervorrichtung nach einem der vorangehenden Ansprüche, wobei wenigstens ein Ventilfederelement (20) vorgesehen ist, welche derart ausgebildet und angeordnet ist, dass es das Verschlusselement (10) in die Verschlussposition drückt.

7. Verfahren zum Einspritzen von Fluid, insbesondere zum dosierten Einspritzen eines Fluids in einen Abgasstrang eines Verbrennungsmotors, wobei das Verfahren den Schritt umfasst, den Druck des Fluids durch Bewegen eines Druckelementes (4) zu erhöhen,
**dadurch gekennzeichnet, dass**
die Bewegung des Druckelements (4) über wenigstens einen von wenigstens zwei voneinander unabhängigen Wirkmechanismen auf ein Verschlusselement (10) einwirkt und wobei jeder der unabhängigen Wirkmechanismen geeignet ist, zu bewirken, dass sich das Verschlusselement (10) von einer Verschlussposition, in der es eine Einspritzöffnung (22) verschließt, in eine geöffnete Position, in der es die Einspritzöffnung (22) freigibt, bewegt,
wobei das Druckelement (4) in einem ersten Wirkmechanismus über das einzuspritzende Fluid auf das Verschlusselement einwirkt und in einem zweiten Wirkmechanismus unabhängig vom einzuspritzenden Fluid auf das Verschlusselement (10) einwirkt.

## Claims

1. Injection and dosing device (1) in particular for injecting fluid into an exhaust tract of an internal combustion engine, having
a pressure and injection chamber (14) which is designed for accommodating the fluid for injection and which has at least one injection orifice (22);
a movable pressure element (4) which is designed such that the pressure of fluid in the pressure and injection chamber (14) can be varied by movement of the pressure element (4) between a suction position, in which the pressure in the pressure and injection chamber (14) is at a minimum, and an injection position, in which the pressure in the pressure and injection chamber (14) is at a maximum; and
a closure element (10) which is movable between a closure position, in which it closes the injection orifice (22), and an open position, in which it opens up the injection orifice (22),
**characterized in that**
the pressure element (4) and the closure element (10) are coupled by means of at least two mutually independent mechanisms of action, and wherein each of the independent mechanisms of action is suitable for having the effect that a movement of the pressure element (4) from the suction position into the pressure position results in a movement of the closure element (10) from the closure position into an open position,
wherein a first mechanism of action is designed such that the pressure element (4), during operation, acts on the closure element (10) via fluid situated in the pressure and injection chamber (14), and a second mechanism of action is designed such that the pressure element (4), during operation, acts on the closure element (10) independently of the fluid in the pressure and injection chamber (14).

2. Injection and dosing device according to Claim 1, which is designed such that the pressure element (4) acts on the closure element (10) by mechanical contact.

3. Injection and dosing device according to Claim 2, which is designed such that the closure element (10) has a coupler element (12) and the pressure element (4) acts on the closure element (10) by mechanical contact with the coupler element (12).

4. Injection and dosing device according to one of the preceding claims, having a coil (8) and having an armature (2), wherein the pressure element (4) is mechanically connected to the armature (2), and wherein the armature (2) and the coil (8) are designed such that the armature (2) and the pressure element (4) can be moved by energization of the coil (8).

5. Injection and dosing device according to Claim 4, wherein at least one armature spring element (24) is provided which is designed and arranged such that it forces the armature (14) and/or the pressure element (4) into the suction position.

6. Injection and dosing device according to one of the preceding claims, wherein at least one valve spring element (20) is provided which is designed and arranged such that it forces the closure element (10) into the closure position.

7. Method for injecting fluid, in particular for the dosed injection of a fluid into an exhaust tract of an internal combustion engine, wherein the method comprises the step of increasing the pressure of the fluid by moving a pressure element (4),
**characterized in that**
the movement of the pressure element (4) acts on a closure element (10) via at least one of at least two mutually independent mechanisms of action, and wherein each of the independent mechanisms of action is suitable for causing the closure element (10) to move from a closure position, in which it closes an injection orifice (22), into an open position, in which it opens up the injection orifice (22),
wherein, in a first mechanism of action, the pressure element (4) acts on the closure element via the fluid for injection, and in a second mechanism of action, the pressure element (4) acts on the closure element (10) independently of the fluid for injection.

## Revendications

1. Dispositif d'injection et de dosage (1), en particulier pour l'injection de fluide dans une ligne d'échappement d'un moteur à combustion interne, comprenant
un espace de pression et d'injection (14) qui est réalisé pour recevoir le fluide à injecter et qui présente au moins une ouverture d'injection (22) ; un élément de pression déplaçable (4) qui est réalisé de telle sorte que la pression de fluide dans l'espace de pression et d'injection (14) puisse être variée par déplacement de l'élément de pression (4) entre une position d'aspiration, dans laquelle la pression dans l'espace de pression et d'injection (14) est minimale, et une position d'injection dans laquelle la pression dans l'espace de pression et d'injection (14) est maximale ; et
un élément de fermeture (10) qui peut être déplacé entre une position de fermeture dans laquelle il ferme l'ouverture d'injection (22) et une position d'ouverture dans laquelle il libère l'ouverture d'injection (22),
**caractérisé en ce que**
l'élément de pression (4) et l'élément de fermeture (10) sont accouplés par le biais d'au moins deux mécanismes fonctionnels indépendants l'un de l'autre et chacun des mécanismes fonctionnels indépendants étant approprié pour faire en sorte qu'un déplacement de l'élément de pression (4) de la position d'aspiration dans la position de pression entraîne un déplacement de l'élément de fermeture (10) de la position de fermeture dans une position d'ouverture,
un premier mécanisme fonctionnel étant réalisé de telle sorte que l'élément de pression (4) agisse, pendant le fonctionnement, par le biais de fluide qui se trouve dans l'espace de pression et d'injection (14), sur l'élément de fermeture (10), et un deuxième mécanisme fonctionnel étant réalisé de telle sorte que l'élément de pression (4) agisse, pendant le fonctionnement, indépendamment du fluide dans l'espace de pression et d'injection (14), sur l'élément de fermeture (10).

2. Dispositif d'injection et de dosage selon la revendication 1, réalisé de telle sorte que l'élément de pression (4) agisse par contact mécanique sur l'élément de fermeture (10).

3. Dispositif d'injection et de dosage selon la revendication 2, réalisé de telle sorte que l'élément de fermeture (10) présente un élément de couplage (12) et l'élément de pression (4) agit par contact mécanique avec l'élément de couplage (12) sur l'élément de fermeture (10).

4. Dispositif d'injection et de dosage selon l'une quelconque des revendications précédentes, comprenant une bobine (8) et un induit (2), l'élément de pression (4) étant connecté mécaniquement à l'induit (2), et l'induit (2) et la bobine (8) étant réalisés de telle sorte que l'induit (2) et l'élément de pression (4) puissent être déplacés par l'alimentation en courant à travers la bobine (8).

5. Dispositif d'injection et de dosage selon la revendication 4, dans lequel au moins un élément de ressort d'induit (24) est prévu, lequel est réalisé et disposé de telle sorte qu'il presse l'induit (14) et/ou l'élément de pression (4) dans la position d'aspiration.

6. Dispositif d'injection et de dosage selon l'une quelconque des revendications précédentes, dans lequel au moins un élément de ressort de soupape (20) est prévu, lequel est réalisé et disposé de telle sorte qu'il presse l'élément de fermeture (10) dans la position de fermeture.

7. Procédé pour injecter du fluide, notamment pour injecter de manière dosée un fluide dans une ligne d'échappement d'un moteur à combustion interne, le procédé comprenant l'étape consistant à augmenter la pression du fluide par déplacement d'un élément de pression (4),
**caractérisé en ce que**
le déplacement de l'élément de pression (4) agit, par le biais d'au moins un parmi au moins deux mécanismes fonctionnels indépendants l'un de l'autre, sur un élément de fermeture (10) et chacun des mécanismes fonctionnels indépendants étant approprié pour faire en sorte que l'élément de fermeture (10) se déplace d'une position de fermeture dans laquelle il ferme une ouverture d'injection (22), dans une position d'ouverture dans laquelle il libère l'ouverture d'injection (22),
l'élément de pression (4) agissant, dans un premier mécanisme fonctionnel, par le biais du fluide à injecter sur l'élément de fermeture et, dans un deuxième mécanisme fonctionnel, agissant indépendamment du fluide à injecter sur l'élément de fermeture (10).
